Europäisches Patentamt

European Patent Office

Office européen des brevets

(19)

(11) Numéro de publication: **0 183 883**
**A1**

(12) ## DEMANDE DE BREVET EUROPEEN

(21) Numéro de dépôt: **84402503.1**

(22) Date de dépôt: **05.12.84**

(51) Int. Cl.⁴: **A 61 G 9/00**

(43) Date de publication de la demande:
**11.06.86 Bulletin 86/24**

(84) Etats contractants désignés:
**AT BE CH DE FR GB IT LI LU NL SE**

(71) Demandeur: **Gouget, Jacques**
**3, rue d'Auteuil**
**F-75016 Paris(FR)**

(72) Inventeur: **Gouget, Jacques**
**3, rue d'Auteuil**
**F-75016 Paris(FR)**

(54) **Perfectionnement aux urinaux de sécurité avec procédés et système d'outillage nécessaire.**

(57) Le perfectionnement consiste à écraser le bourrelet (10) qui borde l'entrée du col d'un urinal de sécurité (1) afin qu'il ne présente plus un bord blessant et que l'opération soit simultanée à celle de la mise en place de l'entonnoir (2) dans son col.

A cet effet, un urinal de sécurité (1) est maintenu dans une mâchoire ouvrante (3) solidaire d'un bâti (5). Dans l'axe du col de l'urinal (1), un ensemble mobile animé par un vérin (6) à double effet comporte un épaulement (9) établi pour écraser contre l'épaulement (11) de la mâchoire le bourrelet ouvert (10) bordant l'extrêmité du col de l'urinal (1) qui, une fois aplati, ne risque plus d'être blessant. Simultanément, l'ensemble mobile comporte un poussoir tronconique (12) qui enfonce en force l'entonnoir (2) introduit préalablement manuellment dans le col de l'urinal (1). Il le pousse plus bas. que nécessaire. Un renflement (14) capable en descendant de franchir en forçant le petit orifice de l'entonnoir (2) remonte automatiquement l'entonnoir (2) à son niveau exact contre un épaulement (15) prévu à cet effet dans le col, lors de sa course en retour.

./...

EP 0 183 883 A1

**Fig. 1**

Perfectionnement aux urinaux de sécurité avec procédés et système d'outillage nécessaire

La présente invention concerne un perfectionnement aux urinaux de sécurité et l'outillage nécessaire pour l'obtenir.

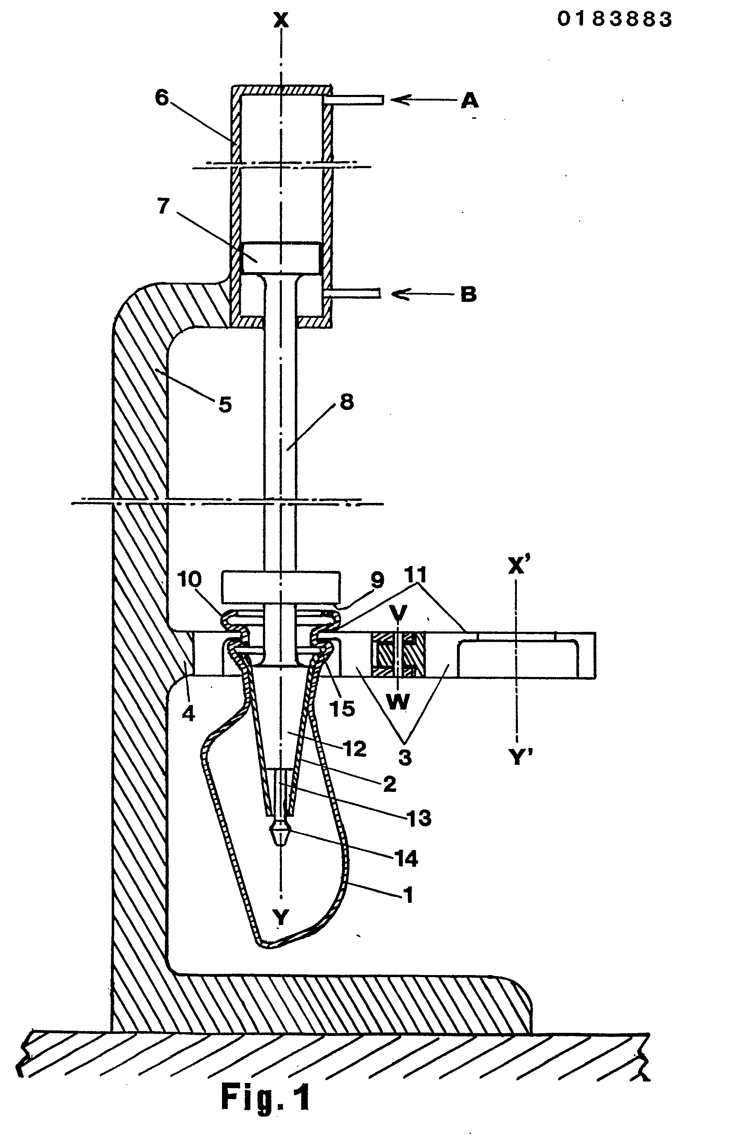

On connaît déjà des urinaux de sécurité dont le col se termine par un bourrelet ouvert du type représenté sur le dessin de la fig. 1. Les corps des urinaux de sécurité en matière plastique, à paroi mince et transparente, sont obtenus à chaud par soufflage de la matière dans un moule. Par tronçonnage à l'extrêmité de leurs cols, ils sont séparés de la paraison qui leur a donné naissance.

Il en résulte des orifices de cols bruts de tronçonnage qui sont blessants. Pour atténuer cet inconvénient, sans pouvoir le supprimer, on a pu donner à l'extrêmité de leurs cols, dans les moules de soufflage, une forme de bourrelet ouvert tel qu'il figure sur le dessin de la fig. 1. Dans cette réalisation, on remarque que le bord tronçonné, en retrait de la paroi intérieure de l'entrée du col, tel qu'il est placé, risque encore d'être blessant. Il n'a pas été encore possible techniquement, par soufflage, d'obtenir directement une forme de col présentant moins d'inconvénients concernant ces urinaux faits notamment en P.V.C.

L'invention consiste à rendre non blessante l'entrée du col de l'urinal en écrasant, suivant l'axe du col, le bourrelet ouvert qui le borde et que cette opération soit effectuée en reprise simultanément sur un outillage capable en série de toujours placer l'entonnoir au bon niveau dans ce col. A cet effet, l'outillage comprend un bâti avec un support d'urinal. Au dessus et dans l'axe du col de l'urinal, un vérin à double effet, solidaire du bâti, commande un ensemble mobile comprenant notamment une tige munie d'un épaulement disposé pour écraser le bourrelet ouvert du col de l'urinal contre un épaulement fixe solidaire du support d'urinal. Cette tige se continue par un poussoir de forme tronconique destiné à enfoncer l'entonnoir préalablement manuellement engagé dans le col de l'urinal. Le réglage pour l'enfoncement des entonnoirs dans les cols, est établi pour que dans tous les cas, ceux-ci soient impérativement enfoncés entre le bon niveau et plus bas dans le col de l'urinal, positions dans lesquelles, lors de la course de retour de l'ensemble mobile actionné par le vérin sous pression, ils sont, si nécessaire, automatiquement remontés en butée contre un épaulement situé au bon niveau dans le col de l'urinal et ceci à l'aide d'un renflement se trouvant à cet effet sur la tige, dans le prolongement du poussoir tronconique. Ce renflement a une section maximum plus importante que celle du petit orifice de l'entonnoir, mais en raison de la relative élasticité du petit orifice de l'entonnoir, lors de la course de descente de l'ensemble mobile, ce renflement est établi pour pouvoir le franchir en forçant beaucoup. C'est aussi parce qu'au retour, il force beaucoup pour repasser au travers dudit orifice, qu'en même temps, il remonte cet entonnoir dont alors, le bord supérieur bute contre l'épaulement situé au bon niveau, à cet effet, dans le col de l'urinal. L'entonnoir étant alors bloqué dans sa course ascendante, le renflement franchit alors en retour, en forçant, le petit orifice de l'entonnoir. L'ensemble mobile remonte complétement sous l'action du vérin sous pression. Il ne reste qu'à ouvrir la machoire du support pour enlever l'urinal de sécurité dont le bord écrasé du col n'est plus blessant.

On constate que par rapport à la technique antérieure, la présente invention permet de livrer des urinaux de sécurité dont le col n'est plus blessant. D'autre part, non seulement le coût de fabrication de ces urinaux ne s'en trouve pas augmenté attendu que l'opération d'écrasement s'effectue simultanément avec celle toujours obligée de l'emboitement des entonnoirs dans les cols, mais il pourrait même s'en trouver diminué par le fait qu'il n'y a plus à tâtonner pour enfoncer les entonnoirs au bon niveau dans les cols, mais qu'ils s'y logent tous automatiquement quel que soit le calibrage des pièces en présence.

L'invention est exposée ci-après plus en détail à l'aide d'un dessin représentant schématiquement seulement un mode d'exécution. La figure 1 représente en élévation l'outillage immobilisé en cours de fonctionnement. Un urinal de sécurité 1 avec son entonnoir 2 est en place dans la mâchoire 3 représentée ouverte pour permettre de voir des parties qui n'apparaîtraient pas autrement. Les deux parties de cette mâchoire s'articulent suivant l'axe VW. Lorsqu'elles sont refermées, l'axe X'Y' se confond avec l'axe XY. L'urinal est alors maintenu latéralement par serrage et verticalement bloqué par l'épaulement 11. La partie mobile de cette mâchoire comporte une poignée non visible sur le dessin puisque située sur la face opposée. Elle permet de tenir fermée la mâchoire. Cette poignée peut être articulée et comporter un ergot venant s'emboîter dans le support 4 pour verrouiller la fermeture de la mâchoire. La partie fixe de la mâchoire est solidaire du support 4, lui-même faisant corps avec le bâti 5 auquel est fixé le vérin 6 suivant l'axe XY. Un ensemble mobile animé par le vérin 6 s'abaisse lorsqu'un fluide sous pression est envoyé en A à l'aide d'un système de distribution et remonte lorsqu'il est envoyé en B. Cet ensemble mobile comprend successivement un piston 7 animant l'ensemble par l'intermédiaire de la tige 8 portant un épaulement 9 prévu pour écraser le bourrelet ouvert 10 contre l'épaulement 11 situé sur la mâchoire 3. La tige 8 se prolonge par un poussoir tronconique 12, lui-même prolongé par une tige 13 portant à son extrémité un renflement 14 destiné, lors de la remontée, à entraîner l'entonnoir 2 jusqu'à ce que le bord supérieur de ce dernier bute contre l'épaulement 15 existant dans le col de l'urinal 1. On remarque la forme préférentielle du renflement 14 dont la conicité inférieure est plus aiguë pour sortir plus facilement de l'orifice de l'entonnoir 2, tandis que sa conicité supérieure est plus obtuse pour, lors de la remontée, buter davantage contre le petit orifice de l'entonnoir 2 et le faire remonter avant de franchir le petit orifice de l'entonnoir 2 en forçant son élasticité.

Revendications

1. Un urinal de sécurité (1) à paroi mince, en matière plastique, obtenu par soufflage, équipé de son entonnoir (2) et présentant autour de l'extrêmité de son col un bourrelet ouvert (10) concentrique, dont la paroi convexe vers l'extérieur, se termine en direction d'un point de l'axe du col sans atteindre l'entrée sous-jacente de ce dernier, ledit bourrelet faisant saillie par rapport à l'extérieur de la portion de paroi sous-jacente dudit col, caractérisé à la fin de l'opération de reprise, par la forme de son bourrelet totalement aplati par écrasement suivant l'axe du col.

2. Système d'outillage suivant revendication 1, caractérisé en ce qu'il permet d'aplatir totalement ledit bourrelet (10) suivant l'axe du col de l'urinal (1).

3. Système d'outillage suivant revendications 1 et 2 principalement composé d'un bâti (5) doté d'un support d'urinal (4) muni d'un système de mâchoire ouvrante (3) dans laquelle l'urinal (1) est maintenu et d'un vérin (6) à double effet agissant par l'intermédiaire d'une tige (8), caractérisé par ses deux épaulements, l'un (9) solidaire de la tige (8), l'autre (11) formé par la partie supérieure de la mâchoire (3) et entre lesquels le bourrelet (10) du col est aplati sous l'effet de la pression exercée par le vérin (6).

4. Système d'outillage suivant revendications précédentes, caractérisé en ce qu'il permet en même temps d'enfoncer en force un entonnoir dans le col de l'urinal.

5. Système d'outillage suivant revendications précédentes, comprenant le prolongement de la tige (8), caractérisé par le poussoir (12) de forme tronconique fixé à l'extrêmité de la tige (8) pour permettre d'enfoncer l'entonnoir (2).

6. Système d'outillage suivant revendications précédentes, caractérisé en ce qu'il permet également de remonter l'entonnoir (2) à sa place exacte dans le col de l'urinal (1).

**0183883**

7. Système d'outillage suivant revendications précédentes comprenant une tige (13) prolongeant l'extrêmité du poussoir (12), caractérisé à l'extrêmité de la tige (13) par un renflement (14) capable de franchir en forçant le petit orifice relativement élastique de l'entonnoir (2) et de remonter automatiquement l'entonnoir (2) à son niveau exact dans le col de l'urinal (1).

Fig. 1

Office européen
des brevets

# RAPPORT DE RECHERCHE EUROPEENNE

EP 84 40 2503

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| Y | DE-A-2 050 519 (GOUGET) <br> * Page 9, lignes 4-21; figure 2 * | 1,2 | A 61 G 9/00 |
| Y | US-A-3 013 310 (FOSTER) <br> * Colonne 2, lignes 14-19, 36-46; figure 4 * | 1,2 | |
| A | US-A-2 725 597 (DOUGLASS) <br> * Colonne 1, lignes 60-72; colonne 2, lignes 1-15; figure 1 * | 3 | |
| A | US-A-2 358 850 (CHENAULT) <br> * Page 1, colonne de gauche; lignes 1-8, 14-16; figure 3 * | 1 | |

DOMAINES TECHNIQUES
RECHERCHES (Int. Cl.4)

A 61 G
B 31 F
B 29 C

Le present rapport de recherche a ete etabli pour toutes les revendications

| Lieu de la recherche <br> LA HAYE | Date d'achèvement de la recherche <br> 18-07-1985 | Examinateur <br> BAERT F.G. |
|---|---|---|